# EUROPEAN PATENT SPECIFICATION

(11) **EP 0 408 082 B1**
(45) Date of publication and mention of the grant of the patent: **05.01.1994**
(21) Application number: 90113551.7
(22) Date of filing: 16.07.1990
(51) Int. Cl.: C02F 5/12, C23F 11/14, C02F 5/08, C23F 11/18

(54) **Water treatment method for boiler**
Verfahren zur Behandlung von Kesselspeisewasser
Procédé pour traiter l'eau de chaudière

(30) Priority: 14.07.1989 JP 183296/89; 21.07.1989 JP 189060/89
(43) Date of publication of application: 16.01.1991
(73) Proprietor: KATAYAMA CHEMICAL, INC., Osaka (JP)
(72) Inventor: Katayama, Sakae, Osaka (JP); Kanada, Sadaoki, Ibaraki-shi, Osaka (JP); Marugame, Kazuo, Kawachinagano-shi, Osaka (JP); Asai, Hiroshi, Higashiosaka-shi, Osaka (JP)
(74) Representative: Reinhard - Skuhra - Weise & Partner

(56) References cited:
- EP-A- 0 056 180
- CH-A- 372 282
- FR-A- 2 358 473
- GB-A- 762 228
- US-A- 3 095 862
- US-A- 3 907 612
- US-A- 4 512 552
- US-A- 4 717 495

## Description

### BACKGROUND OF THE INVENTION

### 1. Field of the Invention

The present invention relates to a water treatment method for boilers. More particularly, the present invention relates to a water treatment method for pure water or soft water boilers which is capable of preventing corrosion, especially pitting corrosion, of a ferrous metal in the water system of pure water or soft water boilers.

### 2. Description of the Related Art

Raw water boilers using raw water such as industrial water, well water or the like as it is, soft water boilers and pure water boilers are generally used. In many cases, the temperatures of boiler water are set at 110°C to the critical temperature under pressure in the boilers.

Of these boilers, boiler apparatuses which use, as the boiler water,water (electric conductivity of 1.0 µS/cm or less) such as pure water, ion-exchange water or the like, from which ion ingredients such as alkali metal ions, alkali earth metal ions (hardness ingredients), sulfate ions, chlorine ions and the like are substantially removed, are known as so-called pure water boilers.

However, in such pure water boilers, carbonate ions are inevitably present in the boiler water owing to the dissolution of carbon dioxide gas contained in air, and a ferrous metal in the water systems corrodes owing to the presence of the carbonate ions and dissolved oxygen. Especially, pitting corrosion, which leads to an critical accident, easily occurs.

On the other hand, soft water boilers use soft water from which hardness ingredients are substantially removed (1 mg/l or less), and which contains anionic ingredients such as sulfate ions, chloride ions or the like. The presence of the anionic ingredients and the dissolved oxygen in soft water causes the corrosion of a ferrous metal in the system, and, especially, easily causes the occurrence of pitting corrosion, which leads to a critical accident.

Such pure water boilers and soft water boilers therefore generally employ a method of preventing the corrosion of the ferrous metal, specifically, pitting corrosion thereof, in which pure water or soft water is passed through a deaerator and then deoxidized by an oxygen scavenger such as a sulfite, hydrazine or the like, which is added to the water, and a phosphate anticorrosive agent is then added to the deoxidized water, and, as occasion demands, an alkali agent is added to the water so as to adjust the pH to 10 to 12 (deoxidation/alkali treatment method).

However, the above-described method requires troublesome deoxidation treatment and has an insufficient effect of preventing corrosion of a ferrous metal.

As a method of preventing or controlling corrosion of a ferrous metal in the water system of a pure water boiler, without effecting deoxidation, the inventors of this application therefore proposed a method in which a volatile amine and an aliphatic hydroxycarboxylic acid such as lactic acid, citric acid, malic acid or the like are added to pure water (Japanese Patent Laid-Open No. 58-96881).

As anticorrosive agents which are capable of preventing or suppressing the corrosion of a ferrous metal in the water system of a pure water boiler or a soft water boiler, without effecting deoxidation, the inventors also proposed the following agents:
a four-ingredient anticorrosive agent containing as effective ingredients (a) at least one compound selected from the group consisting of molybdic acid, alkali salts thereof, tungstic acid and alkali salts thereof, and nitrous acid and alkali salts thereof, (b) an aliphatic hydroxycarboxylic acid or an alkali salt thereof, (c) a compound which can easily release metal ions in water, and (d) a polymer or copolymer of an olefinic compound which has a molecular weight of 500 to 100000 and which is water soluble (Japanese Patent Publication No. 62-57715: USP 4,512,552); and
a five-ingredient anticorrosive agent containing the above four ingredients and a monoamine having 2 to 8 carbon atoms (Japanese Patent Publication No. 62-27157).

In recent years, however, the capacity of a water purifying apparatus for supplying pure water, ion-exchange water, soft water or the like, of ion-exchange resin, of a water softener or the like tends to become insufficient with increases in evaporation and heat transfer load of a boiler, as compared with the holding water quantity thereof.

As a result, ion ingredients such as alkali metal ions, sulfate ions, chloride ions or the like are brought into the water system of a pure water boiler so that the electric conductivity of the water supplied to the pure water boiler exceeds 1 µS/cm. Further, the water hardness of a soft water boiler is frequently increased to 20 mg/l or more by inclusion of hardness ingredients in the water of a soft water boiler (hardness leak) under circulation.

Further, due to the limitation of the capacity of a water purifying apparatus, a water softener or an ion-exchange resin, a silicate ingredient or iron ingredient, is also frequently included in the water.

When the method disclosed in Japanese Patent Laid-Open No. 58-96881 is performed in the water system of a pure water boiler in which such various impurity ingredients are mixed, the anticorrosive effect is easily deteriorated. This tendency is remarkable when the electric conductivity of the water supplied to the pure water boiler exceeds 1.0 µS/cm, and when the content of ferrous ingredients exceeds 0.1 mg/l.

On the other hand, when the anticorrosive agent disclosed in Japanese Patent Publication No. 62-27157 or 62-57715 is added to the water system of a soft water boiler in which the hardness ingredients are included, a black anticorrosive film is not uniformly formed owing to the adhesion of scales to the surface of a ferrous metal. As a result, the. anticorrosive effect on the ferrous metal is sometimes made insufficient. This tendency is remarkable when the content of hardness ingredients exceeds 20 mg/l.

Although the polyamine represented by the formula (I) described below and used in the present invention is known as a water treatment agent for boilers (Japanese Patent Publication No. 50-35601), the use of such a polyamine in combination with other compounds in the methods of the present invention and the effect thereof are not known.

CH-A-372 282 discloses a water treatment agent for preventing corrosion in water systems comprising as active components a water soluble salt of an organic carboxylic acid and a polyamine. As suitable organic salts sodium malate is used. As suitable amines diethylenetriamine and triethylenetetramine are described.

GB-A-762 228 discloses a water treatment agent for anticorrosive treatment of tanks comprising as active ingredients a neutral salt prepared by reacting a polybasic carboxylic acid and a polyamine. As suitable polybasic acids, citric acid is mentioned and as suitable polyamines, diethylenetriamine, triethylenetetramine and tetraethylenepentamine are described.

### SUMMARY OF THE INVENTION

The present invention has been achieved with a view to solving the above problem, and it is an object of the present invention to provide a water treatment method which is capable of surely preventing the corrosion of a ferrous metal in a water system, without effecting deoxidation.

The present invention provides a water treatment method for pure water boilers characterized by adding to the water system of a pure water boiler (a) a compound which can release aliphatic hydroxycarboxylic acid ions in water and (b) a polyamine represented by the following formula (I):

H₂N(CH₂CH₂NH)ₙH (I)

(wherein n denotes an integer of 2 to 5) or an acid addition salt thereof so that the amount of each of the ingredients is 0.2 to 50 epm so as to prevent the corrosion of a ferrous metal in the water system of the pure water boiler.

The present invention further provides a water treatment method for soft water boilers characterized by adding to the water system of a soft water boiler the following ingredients:
(a) 50 to 5000 mg/l of a compound which can release aliphatic hydroxy carboxylic acid ions in water;
(b) 20 to 5000 mg/l of a polyamine represented by the following formula (I):

   H₂N(CH₂CH₂NH)ₙH (I)

   (wherein n denotes an integer of 2 to 5) or an acid addition product thereof;
(c) 1 to 100 mg/l of at least one compound selected from the group consisting of molybdic acid, tungstic acid, nitrous acid and alkali salts thereof; and
(d) a heavy metal compound, which can release a zirconium, tin, manganese or nickel ions, in an amount of 0.5 to 100 mg/l in terms of metal ion;

so as to prevent the corrosion of a ferrous metal in the water system of the pure water boiler.

The present invention has been achieved on the basis of the finding of the fact (1) that, when the specific amounts of the above-described two ingredients (a) and (b) are added to the water system of a pure water boiler, a strong, dense and anticorrosive black film consisting of Fe₃O₄ is formed on a surface of the ferrous metal of the boiler water system, the fact (2) that the black film permits anticorrosive treatment without using any oxygen scavenger, and the fact (3) that the facts (1) and (2) are also found in a boiler water system containing impurity ingredients.

### BRIEF DESCRIPTION OF THE DRAWINGS

Fig. 1 is a drawing which shows the X-ray diffraction chart of the anticorrosive film formed when a water treatment method of the present invention is carried out;
Fig. 2 is a drawing which shows the chart of the same obtained by an X-ray microanalyzer;
Fig. 3 is an explanatory view of the arrangement of the testing apparatus used for evaluating a water treatment method of the present invention.

### DETAILED DESCRIPTION OF THE PREFERRED EMBODIMENTS

In the present invention, the term "water system of pure water boiler" means the apparatus system of a pure water boiler in which the boiler water supplied is present and circulated.

The boiler water means the water used as feed water in a pure water boiler and basically includes pure water, ion-exchange water and concentrated water thereof. The boiler water also includes water containing impurity ingredients, as described above, for example, water having electric conductivity of more than 1.0 µS/cm and containing ferrous ingredients at a concentration of more than 0.1 mg/*l*. The present invention is particularly effective for a case where such impurity ingredients are mixed in the boiler water.

Examples of compounds which can be used in the present invention and which can release aliphatic hydroxycarboxylic acid ions include lactic acid, citric acid, malic acid, tartaric acid, mannonic acid, gluconic acid and glucono-δ-lactone. Intramolecular esters may be used which can be converted into aliphatic hydroxycarboxylic acids by hydrolysis in the water system. Since the use of a salt of the aliphatic hydroxycarboxylic acid (for example, a sodium, potassium or ammonium salt or the like) increases the impurity cations in the boiler water and decreases the function as the aliphatic hydroxycarboxylic acid ions, the salt is as a rule unsuitable for use in the pure water system with the exception described below.

Examples of polyamines represented by the formula (I) and acid addition products thereof, that may be used in the present invention, include diethylenetriamine, triethylenetetramine, tetraethylenepentamine, pentaethylenehexamine, and hydrochlorides, nitrates, sulfates and the like thereof. As a rule, it is unsuitable to use such polyamines in the form of an acid addition salt from the viewpoints of prevention of increase in impurity anions in the boiler water and prevention of decrease in the function of the polyamines.

Any one of the aliphatic hydroxycarboxylic acids and any one of the polyamines may be used in the form of a salt thereof.

In the present invention, 0.2 epm to 50 epm of compound (referred to as "ingredient (a)" hereinafter) which can release an aliphatic hydroxycarboxylic acid group in water is added to the water system of a pure water boiler, and 0.2 epm to 50 epm of polyamine (referred to as "ingredient (b)" hereinafter) represented by the formula (I) is added to the water system. The unit "epm" means milligram equivalent/*l*. If the amount of either of the ingredients is less than 0.2 epm, the intended anticorrosive effect cannot be obtained, while if it exceeds 50 epm, an improvement in the anticorrosive effect cannot be expected in proportion to an increase in amount.

However, when pure water boiler water containing alkali metal ions and sulfate ions or chloride ions is used, if the alkali metal ions and the sulfate ions or chloride ions are imbalanced (including a case where either kind of the ions is substantially zero), the function of the ingredient (a) or (b) is deteriorated by excess ions in the balanced state. For example, if the alkali metal ions are excessive, the ingredient (a) is changed to the form of an alkali metal salt of an aliphatic hydroxycarboxylic acid in the water in an amount corresponding to the excess equivalent, resulting in a deterioration in the anticorrosive function. If the sulfate ions or chloride ions are excessive, the ingredient (b) is changed to the form of an acid addition salt of a polyamine in an amount corresponding to the excess equivalent, resulting in a deterioration in the anticorrosive function.

In such a case, therefore, it is preferable to increase the amount of the ingredient (a) or (b) added by an amount corresponding to the equivalent of excess alkali metal ions or excess sulfate ions or chloride ions.

In the present invention, the ingredients (a) and (b) are preferably added to the water system of a pure water boiler in such a manner that the molar ratio between the ingredients (a) and (b) is 12 : 1 to 1 : 10, preferably 6 : 1 to 1 : 5, within the above-described ranges. It is more preferable from the viewpoint of corrosion prevention that the ratio by epm of the ingredient (b) to the ingredient (a) is not less than 1.

On the other hand, in the water system of a pure water boiler in which a silicate ingredient is present as an impurity ingredient, a sodium or potassium salt of an aliphatic hydroxycarboxylic acid can be used as part or the entirety of the ingredient (a). In this case, since the sodium or potassium in the aliphatic hydroxycarboxylate easily combines to the silicate ingredient to form a silicate, the water system assumes substantially the same state as that wherein an aliphatic hydroxycarboxylic acid is added. This is a preferable form because the occurrence of possible silica scales is prevented due to the high solubility of the silicate formed.

When the ingredients (a) and (b) are added to the water system of a pure water boiler and used therein in the above effective amounts, a strong and anticorrosive film is formed on the surface of the ferrous metal in the water system. It is confirmed that this film consists of tri-iron tetroxide, and this film is extremely dense and has no defective portion and a uniform thickness.

It is also confirmed that the film of tri-iron tetroxide reaches the surface layer of a base material (iron material). It is also thought that, since no organic compound such as a polyamine or the like, which is the ingredient (b), is included in the film, the ingredient (a) has some catalytic action. The film is not affected by the impurity ingredients and carbonate ions (having a function to produce corrosion and accelerate it), which are present in the boiler water, and the dissolved oxygen, and has an anticorrosive effect. The film thus has an advantage in that the addition of an oxygen scavenger, which is hitherto an essential ingredient, is made unnecessary.

Although the ingredients (a) and (b) may be added simultaneously or separately, it is preferable that a preparation containing the two ingredients is prepared and then added. Particularly, it is preferable from the viewpoints of workability and preservation of the agent that the preparation containing the two ingredients is a liquid preparation. The agent is generally used in the form of a solution obtained by dissolving the effective ingredients in water. In this case, although the molar ratio between the ingredient (a) and the ingredient (b) in the agent (aqueous treatment agent) is appropriately specified in accordance with the above-described treatment method, the ratio is generally 12 : 1 to 1 : 10, preferably 6 : 1 to 1 : 5. The ratio by epm of the ingredient (b) to the ingredient (a) is preferably not less than 1 from the viewpoint of corrosion prevention.

On the other hand, in the water system of a soft water boiler, the above-described ingredients (a) and (b) as well as the following ingredients are used:
(c) at least one compound selected from the group consisting of molybdic acid, tungstic acid, nitrous acid and alkali salts thereof; and
(d) a heavy metal compound which can release zirconium, tin, manganese or nickel ions in water.

The use of these ingredients permits the formation of a strong anticorrosive film and anticorrosive treatment which is not affected by contaminant hardness ingredients and dissolved oxygen.

The term "water system of soft water boiler" means the apparatus system of a soft boiler in which the boiler water supplied is present and circulated.

The boiler water means the water used as feed water in a soft boiler and basically includes soft water and concentrated water thereof. However, as described above, the boiler water also includes water which contains leak hardness ingredients, for example, water which contains the total hardness ingredients up to about 20 to 400 mg/*l*. The present invention is particularly effective for a case where hardness leaks.

The alkali salts in the group of the ingredients (c) include salts of alkali metals such as sodium, potassium or the like and ammonium salts.

The ingredients (c) are molybdic acid, tungstic acid, nitrous acid or an alkali salt thereof, which are compounds similar to each other in use as oxidative anticorrosive ingredients. At least one of these compounds may be used.

The above-described ingredient (d) is a heavy metal compound which can release zirconium, tin, manganese or nickel ions in water. Examples of such heavy metal compounds include chlorides, oxychlorides, nitrates, sulfates and the like such as zirconium chloride, zirconium sulfate, zirconium nitrate, zirconyl chloride, zirconyl nitrate, zirconyl sulfate, stannous chloride, stannic chloride, stannous sulfate, manganese chloride, manganese sulfate, nickel chloride, nickel sulfate, nickel nitrate and the like .

The above-described ingredients (a) to (d) are added to the soft boiler water in such a manner that the ingredient (c) is 1 to 100 mg/l, preferably 2.5 to 100 mg/l, the ingredient (a) is 50 to 5000 mg/l, preferably 100 to 5000 mg/l, the ingredient (d) is 0.5 to 100 mg/l, preferably 1 to 100 mg/l and the ingredient (b) is 20 to 5000 mg/l, preferably 50 to 5000 mg/l. However, the amount of the ingredient (d) is converted into metal ion.

If the adding amount of at least one of the ingredients is smaller than the minimum value, a good anticorrosive effect cannot be obtained even if the other ingredients are present in effective amounts. The anticorrosive effect is improved with an increase in the adding amount. However, a case where each of the ingredients must be added in an amount greater than the maximum value is very rare from the economical viewpoint.

Although the ingredients (a) to (d) may be added simultaneously or separately, it is preferable that an agent containing the four ingredients is prepared and then added.

It is preferable that the compounding ratio of the ingredients in the agent (water treatment agent for soft water boilers) corresponds to the above adding ratio. It is generally preferable that, if the total amount of the ingredients (a) to (d) is 100 parts by weight, the ingredient (c) is within the range of 0.01 to 58.7 parts by weight, the ingredient (a) is within the range of 0.95 to 99.6 parts by weight, the ingredient (d) is within the range of 0.005 to 58.5 parts by weight (in terms of metal ion), and the ingredient (b) is within the range of 0.38 to 99.0 parts by weight.

The water treatment agent for soft boilers of the present invention, which contains the four ingredients, is preferably a solution agent from the viewpoints of workability and preservation of the agent. In this case, it is preferable to prepare the solution agent by first dissolving the ingredient (a) in an aqueous medium such as water, a solvent mixture containing water and an hydrophilic organic solvent, which is used as a solvent, adding the ingredient (d) and well agitating the resultant mixture, adding the ingredient (b) and well agitating the resultant mixture, adding the ingredient (c) and then well agitating the resultant mixture to form a solution.

The total concentration of the ingredients (a) to (d) in the solution agent is preferably 10 to 70% by weight. It is also preferable from the viewpoint of formation of a further strong and anticorrosive film that the molar ratio between the ingredients (a) and (b) is within the range of 6: 1 to 1 : 10.

When the treatment method for pure water boilers or soft water boilers of the present invention is carried out, various additives may be used in combination with the above-described necessary ingredients unless the effects of the necessary ingredients are inhibited. The additives may be previously mixed in the agent. Example of such additives that may be used in combination with the necessary ingredients include water-soluble dispersants, pH adjustors and other anticorrosive ingredients.

Examples of such water-soluble dispersants include homopolymers of monomers such as acrylic acid, methacrylic acid and maleic acid, copolymers of at least two monomers thereof, copolymers with other compounds which respectively have other ethylenic double bonds, each of which is copolymerizable with any one of the monomers and contains 20 mol% or more of the monomer ingredient, and mixed polymers containing at least two of the homopolymers and copolymers. The water-soluble dispersants include water-soluble polymers each having a molecular weight of 500 to 100000.

Other examples of water-soluble dispersants that may be used include the following compounds:

Phosphonic acid derivatives represented by the following formulae:

Formula (2) 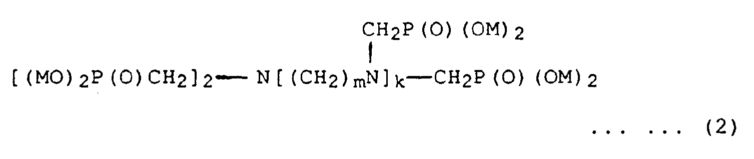
(wherein k denotes 0 or an integer of 1 or 2, m denotes an integer of 2 to 6, and M denotes a hydrogen atom, sodium or potassium, which may be the same or different)

Formula (3) 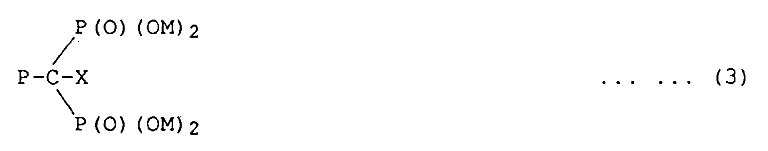
(wherein X denotes OH or NH₂ and M denotes a hydrogen atom, sodium or potassium, which may be the same or different);
Bis(poly-2-carboxyethyl)phosphinic acid represented by the following formula:

Formula (4) 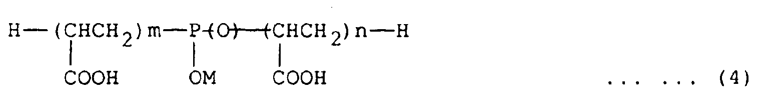
(wherein M denotes a hydrogen atom, sodium or potassium, and m and n each denote a positive integer (m + n = 4 to 20));
Amino-substituted phosphinic acid derivatives represented by the following formula:

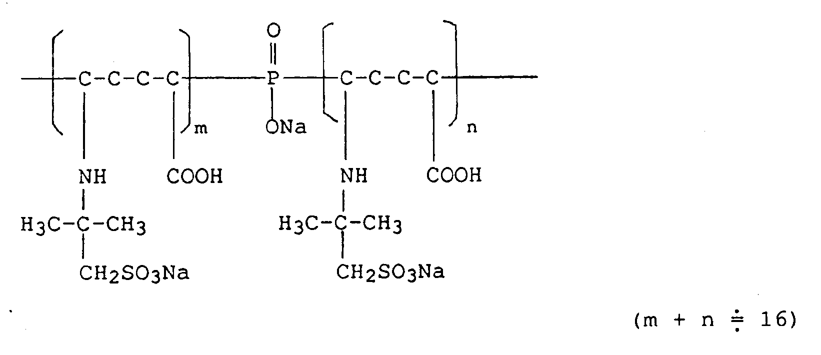

Examples of pH adjustors that may be used in the present invention include alkali hydroxides such as sodium hydroxide, potassium hydroxide and the like and ammonia, all of which are used for adjusting pH to the alkali side, and hydrochloric acid, sulfuric acid, nitric acid and the like, all of which are used for adjusting pH to the acid side. Any one of the pH adjustors is added in accordance with the optimum pH for pure water or soft water boilers to which the pH adjustor is added. When copper or an aluminum family metal is present in the water system, ammonia should not be added. Nitric acid and hydrochloric acid should not be added in usual cases.

Examples of other preferable anticorrosive ingredients that may be used in the present invention include monoamines such as propylamine, butylamine, morpholine, cyclohexylamine, ethanolamine, prophanolamine, aminomethylpropanol and the like, all of which are generally known as anticorrosive agents for condensate systems and each of which has 2 to 8 carbon atoms. In a preferable form of the present invention, the anticorrosive agent used is not related directly to the formation of the anticorrosive film in the present invention and is selected from the viewpoint of corrosion prevention in the steam condensate system in a boiler apparatus. When an anticorrosive agent forms a salt with the ingredient (a) or (c), it may be added in the form of a salt.

### (Example)

The present invention is described in detail below with reference to the examples below.

### Pure water boiler

### Test Example 1

The effect of a treatment agent in a pure water boiler was examined by using an autoclave. A predetermined amount of the agent was added to 500 ml of pure water, and the resultant mixture was then charged in the autoclave. A soft steel specimen (trade name, SPCC; 30 x 50 x 1 mm) was then attached to an stirring rod, which was interlocked with a motor so that the specimen could be rotated, and immersed in the test solution contained in the autoclave. After the autoclave had been closed, a test was made for 72 hours under rotation at 100 rpm (100 rotations per minute) of the specimen attached to the stirring rod and under such conditions that the pressure in the autoclave was 100 Kg/cm₂ in terms of saturated vapor pressure, and the water temperature was 310°C. After the test, the specimen was discharged from the autoclave, and a surface of thereof was observed. The specimen was then immersed in a hydrochloric acid solution for washing for the purpose of measuring the corrosion speed thereof, i.e., a corrosion amount per day per dm² (mdd), in accordance with the method of JISK0100. However, in the examples of the present invention in which both the ingredients (a) and (b) are used, since the film formed on the specimen was not removed, the time taken for immersing the specimen in the hydrochloric acid solution for washing was 4 times (1 minute) a regular time. In such combination systems, therefore, the corrosion speed (mdd) was determined by immersing the specimen in the hydrochloric acid solution for washing for 1 minute. The results obtained are shown in Table 1. The test water used was prepared by adding sodium chloride to pure water having an electric conductivity of 1.0 µS/cm or less so as to increase the conductivity to 200 µS/cm (the concentration of sodium chloride, about 95 mg/l). The concentration of dissolved oxygen in the test water before the tests was 9.0 mg/l.

When a compound, which can produce carboxylic acid ions in water, was singly used in a test or when the pH of the test water used was 9.0 or less, the pH of the test water, to which the agent was added, was adjusted to 9.0 by adding sodium hydroxide thereto and then subjected to the test. Since sodium chloride was added on the assumption that anions and cations leak, the concentrations by mole of the anions and cations, which are leak components, are equal to each other. There is thus no need for neutralization using the ingredients (a) and (b) shown in Table 1, and the amount of each of the ingredients added is also shown in Table 1.

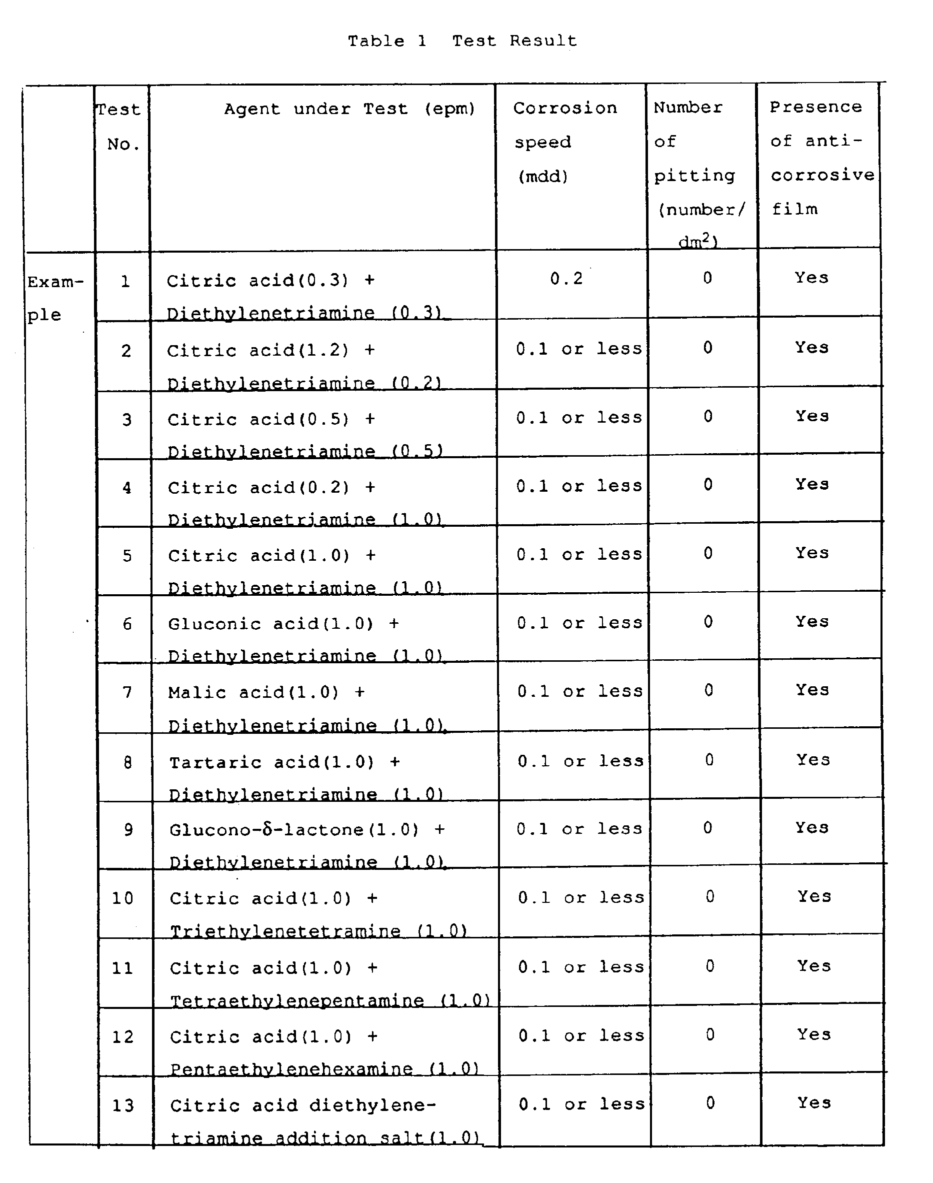

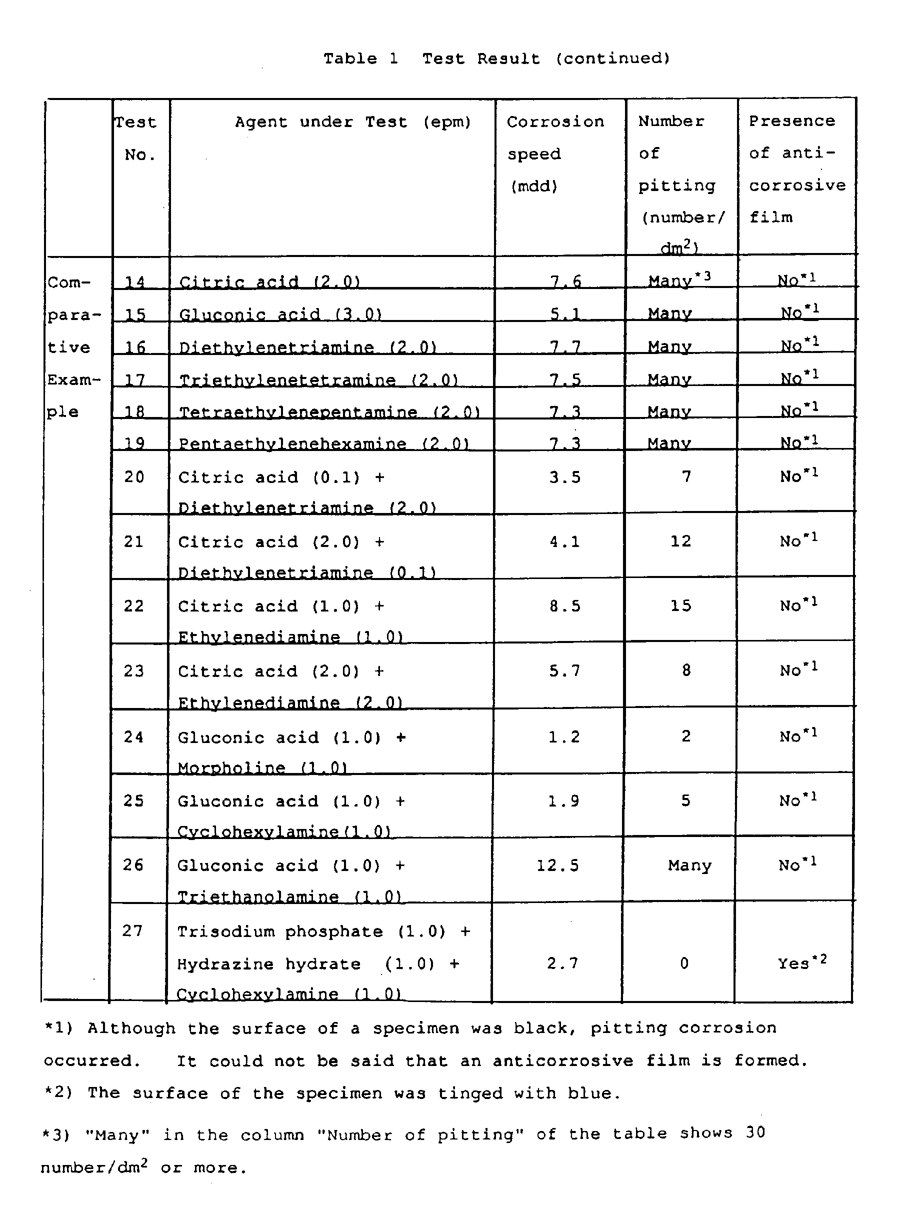

### [Consideration]

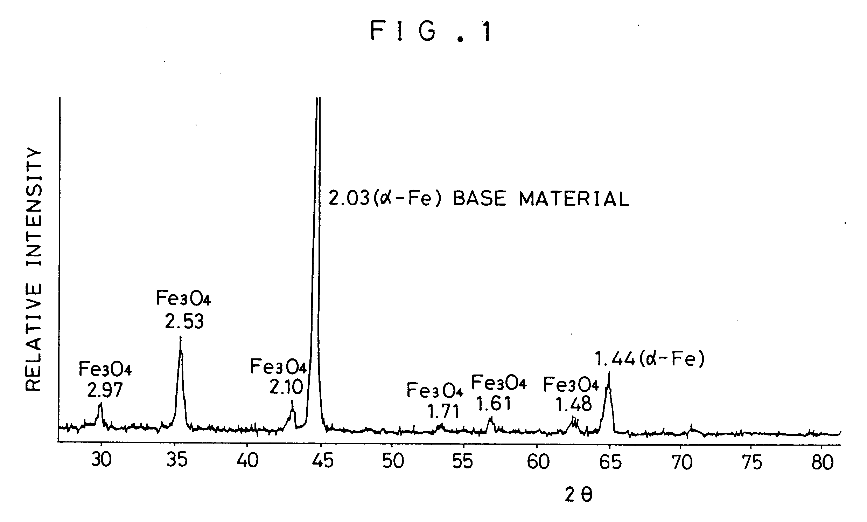

When the film formed in an example of the present invention (Test No. 6) was subjected to X-ray diffraction analysis, the X-ray diffraction pattern shown in Fig. 1 was obtained. Triiron tetroxide was confirmed by searching for the pattern in the ASTM cards, and other iron oxides were not detected. It could be said that the component of the film is triiron tetroxide.

When a surface and a section of the film were observed by an electron microscope, it was confirmed that the film has a dense form having a uniform thickness without any defective portion.

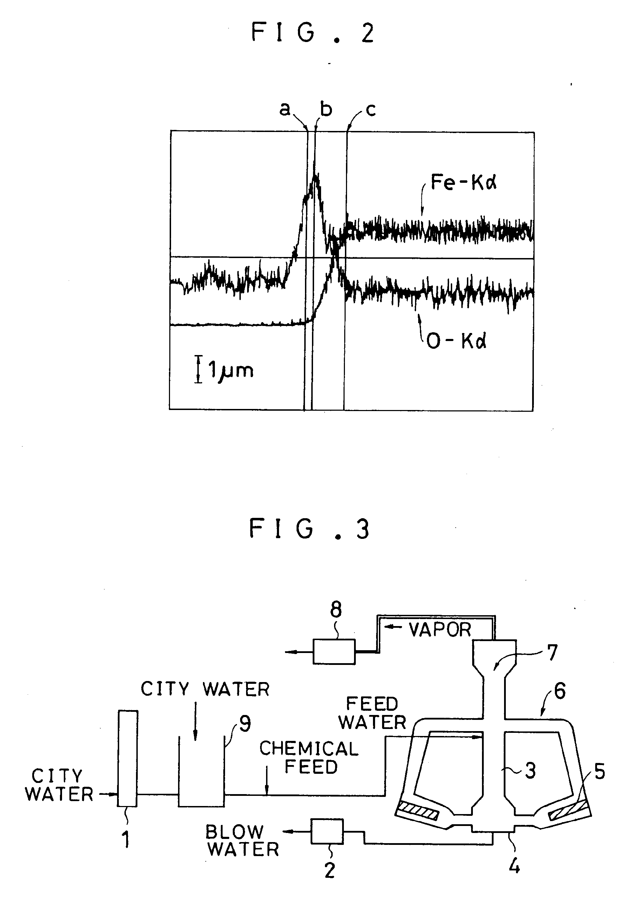

When a section of the film was measured by an X-ray microanalyzer, it was confirmed that triiron tetroxide reaches the surface layer of the base material, as shown in Fig. 2. Namely, in the drawing, a denotes a surface from which the detection of Fe was started, b denotes the surface of the base material (α-Fe), and c denotes a surface from which oxygen (O) was not detection. This shows that the Fe₃O₄ layer (thickness, 0.3 µm) formed on the surface of the base material (α-Fe) is present between the surfaces a and b, the surface layer of the base material (thickness, 0.6 µm), which was changed to Fe₃O₄, is present between the surfaces b and c. After all, the Fe₃O₄ layer is present between the surfaces a and c (thickness of 0.9 µm).

Each of the specimens, on which the film was formed, was examined with respect to IR absorption by using a reflection IR spectrometer. As a result, no organic substance was detected, and it was confirmed that neither polyalkylene polyamine nor aliphatic hydroxycarboxylic acid is contained in the film.

### Example 1

The pure water boiler (pressure, 25 Kg/cm²; evaporation loss, 23 T/H; holding water quantity, 20 m³) in a certain factory generally used as a water treatment agent trisodium phosphate, hydrazine hydrate and cyclohexylamine. Since anions and cations leaked, the feed water of the boiler had an electric conductivity of 2 to 6 µS/cm (average, 5.1 µS/cm) and an iron content of 0.02 to 0.3 mg/*l* (average, 0.15 mg/l).

When the interior of the boiler was examined, the occurrence of pitting corrosion was observed at several positions in a water tube portion, which served as a heat transfer surface and a boiler drum which served as a boiler non-heat transfer surface. The adhesion of iron oxides was observed in the upper portion of any one of the pitting corrosion portions. The progress of corrosion (local corrosion) was also observed in the lower portion of each pitting corrosion portion where iron oxides locally adhered. The entire surfaces of other portions where neither pitting corrosion nor local corrosion occurred were brown. The deposits including the corrosion products in the boiler were collected, and the constituent elements of the deposits were analyzed by a fluorescent X-ray analyzer. As a result, the iron component (iron oxide), which was a main component, as well as calcium, magnesium, silica and phosphorus were detected. It is thought that this is caused by leaks of these components and carrying in the boiler at times during the supply of water to the boiler.

The agent described below was added as a water treatment agent for the boiler in an amount of 5 g/T relative to the supply water of the boiler. The boiler was operated without other agents such as an oxygen scavenger and the like being added.

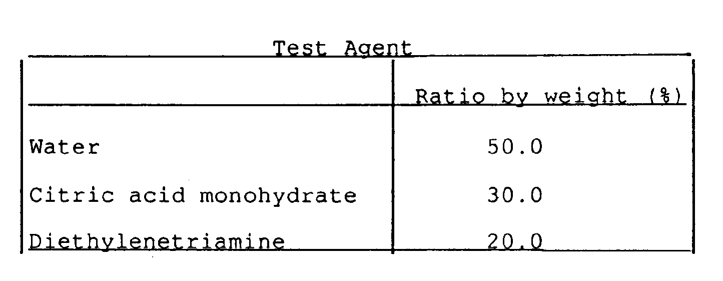

The boiler was operated under the same conditions as conventional conditions. Before the operation of the boiler was started, five soft steel specimens (trade name SPCC, 30 x 50 x 1 mm) are placed at positions in the boiler, and the boiler was operated. The magnification of concentration of the boiler water was about 50 times because the blow ratio of the boiler water was about 2%. The concentrations of citric acid and diethylenetriamine in the test agent contained in the boiler water were thus about 1.07 epm and about 1.46 epm, respectively. The concentration of the ingredients remaining in the boiler water was at least 0.5 epm excess of the equivalent of neutralization of the leak components comprising anions and cations during the operation of the boiler (during the test).

The boiler was operated for 24 hr/day, and the test period was 132 days. After the test had been completed, the boiler was opened and examined. As a result, the deposit of iron oxide, which was recognized before the test, was removed, and the iron oxide adhering to the portions where pitting corrosion or local corrosion occurred was removed. In any case, a black film which was considered as magnetite was formed on a corrosion portion, and no progress of corrosion was recognized. Neither occurrence of corrosion nor deposit was observed in any other portions.

The specimens which were placed in the boiler before the test were discharged, and surfaces thereof were observed. The corrosion speed (mdd) of each of the specimens was then measured in accordance with the method of JISK0100. The results obtained are shown in Table 2, the quality of the supply water of the boiler during the test was shown in Table 3, and the quality of the boiler water is shown in Table 4.

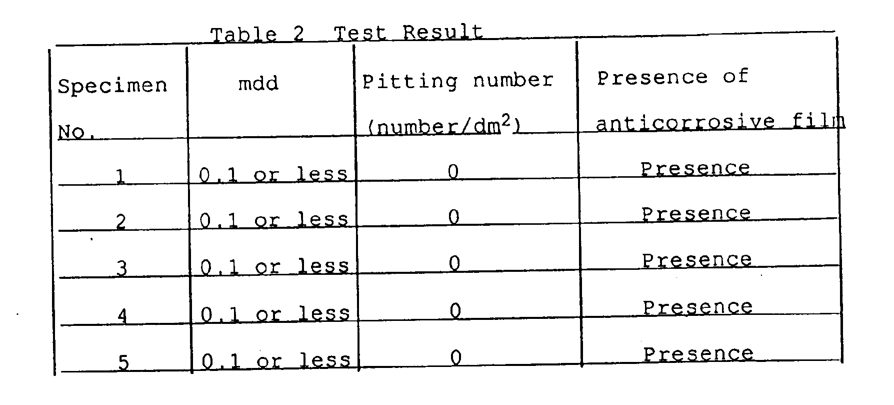

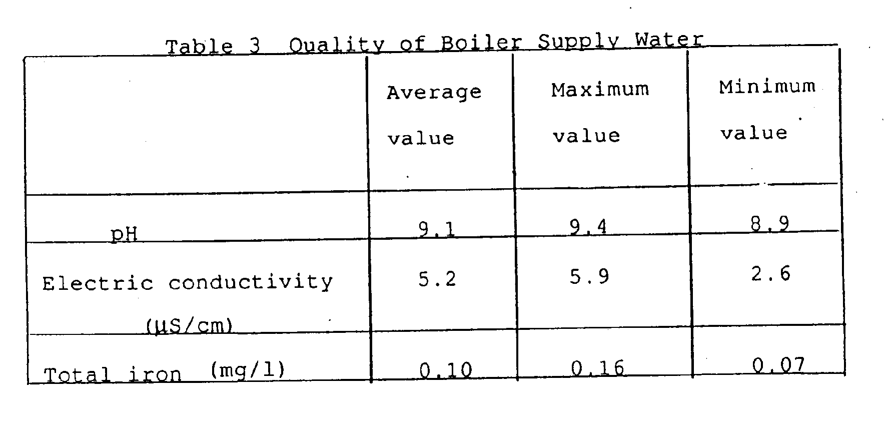

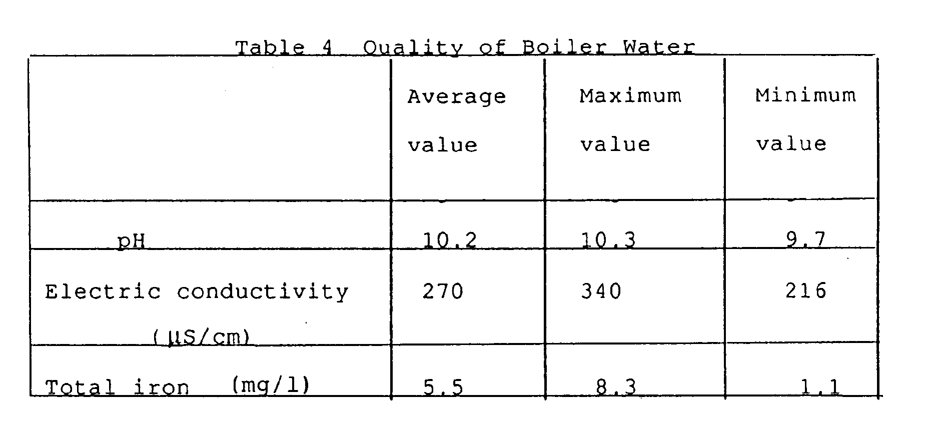

### Soft water boiler

The present invention is described below with reference to formulation examples and examples for a soft water boiler. The composition of each of the formulations is expressed by % by weight, and the balance is water.

### Formulation (1)

- Sodium molybdate dihydrate: : 1.0
- Gluconic acid (50%): :50.0 (as 50% gluconic acid)
- Stannous chloride dihydrate: : 1.0
- Diethylenetriamine: : 17.0

Gluconic acid, stannous chloride dihydrate, sodium molybdate dihydrate and diethylenetriamine were added to water in this order in the above-described compounding ratio and dissolved therein to form a liquid agent.

### Formulation (2)

- Sodium molybdate dihydrate: : 1.0
- Glucono-δ-lactone: : 25.0
- Stannous chloride dihydrate: : 1.0
- Diethylenetriamine: : 17.0

Glucono-δ-lactone was dissolved in water, and stannous chloride dihydrate, sodium molybdate dihydrate and diethylenetriamine were then added to the resultant solution in this order in the above-described compounding ratio and dissolved therein to form a liquid agent.

### Formulation (3)

- Sodium molybdate dihydrate: : 0.5
- Malic acid: : 15.0
- Stannous chloride dihydrate: : 0.5
- Diethylenetriamine: : 30.0

Malic acid was dissolved in water, and stannous chloride dihydrate, sodium molybdate dihydrate and diethylenetriamine were then added to the resultant solution in this order in the above-described compounding ratio and dissolved therein to form a liquid agent.

### Formulation (4)

- Sodium molybdate dihydrate: : 0.7
- Citric acid monohydrate: : 20.0
- Stannous chloride dihydrate: : 0.7
- Diethylenetriamine: : 30.0

Citric acid monohydrate was dissolved in water, and stannous chloride dihydrate, sodium molybdate dihydrate and diethylenetriamine were then added to the resultant solution in this order in the above-described compounding ratio and dissolved therein to form a liquid agent.

### Formulation (5)

- Sodium molybdate dihydrate: : 0.7
- Citric acid monohydrate: : 20.0
- Stannous chloride dihydrate: : 0.7
- Triethylenetetramine: : 30.0

Citric acid monohydrate was dissolved in water, and stannous chloride dihydrate, sodium molybdate dihydrate and triethylenetetramine were then added to the resultant solution in this order in the above-described compounding ratio and dissolved therein to form a liquid agent.

### Formulation (6)

- Sodium molybdate dihydrate: : 0.7
- Citric acid monohydrate: : 20.0
- Stannous chloride dihydrate: : 0.7
- Tetraethylenepentamine: : 30.0

Citric acid monohydrate was dissolved in water, and stannous chloride dihydrate, sodium molybdate dihydrate and tetraethylenepentamine were then added to the resultant solution in this order in the above-described compounding ratio and dissolved therein to form a liquid agent.

### Formulation (7)

- Sodium molybdate dihydrate: : 0.7
- Citric acid monohydrate: : 20.0
- Stannous chloride dihydrate: : 0.7
- Pentaethylenehexamine: : 30.0

Citric acid monohydrate was dissolved in water, and stannous chloride dihydrate, sodium molybdate dihydrate and pentaethylenehexamine were then added to the resultant solution in this order in the above-described compounding ratio and dissolved therein to form a liquid agent.

### Formulation (8)

- Sodium tungstate dihydrate: : 0.7
- Citric acid monohydrate: : 20.0
- Stannous chloride dihydrate: : 0.7
- Tetraethylenepentamine: : 30.0

Citric acid monohydrate was dissolved in water, and stannous chloride dihydrate, sodium tungstate dihydrate and tetraethylenepentamine were then added to the resultant solution in this order in the above-described compounding ratio and dissolved therein to form a liquid agent.

### Formulation (9)

- Sodium tungstate dihydrate: : 0.7
- Citric acid monohydrate: : 20.0
- Stannous sulfate: : 0.7
- Tetraethylenepentamine: : 30.0

Citric acid monohydrate was dissolved in water, and stannous sulfate, sodium tungstate dihydrate and tetraethylenepentamine were then added to the resultant solution in this order in the above-described compounding ratio and dissolved therein to form a liquid agent.

### Formulation (10)

- Sodium molybdate dihydrate: : 0.7
- Citric acid monohydrate: : 20.0
- Zirconium sulfate tetrahydrate: : 0.7
- Tetraethylenepentamine: : 30.0

Citric acid monohydrate was dissolved in water, and zirconyl sulfate, sodium molybdate dihydrate and tetraethylenepentamine were then added to the resultant solution in this order in the above-described compounding ratio and dissolved therein to form a liquid agent.

### Formulation (11)

- Sodium molybdate dihydrate: : 0.7
- Citric acid monohydrate: : 20.0
- Manganous sulfate heptahydrate: : 0.7
- Tetraethylenepentamine: : 30.0

Citric acid monohydrate was dissolved in water, and manganous sulfate heptahydrate, sodium molybdate dihydrate and tetraethylenepentamine were then added to the resultant solution in this order in the above-described compounding ratio and dissolved therein to form a liquid agent.

### Formulation (12)

- Sodium molybdate dihydrate: : 0.7
- Citric acid monohydrate: : 20.0
- Nickel sulfate heptahydrate: : 0.7
- Tetraethylenepentamine: : 30.0

Citric acid monohydrate was dissolved in water, and nickel sulfate heptahydrate, sodium molybdate dihydrate and tetraethylenepentamine were then added to the resultant solution in this order in the above-described compounding ratio and dissolved therein to form a liquid agent.

### Formulation (13)

- Sodium sulfite: : 0.7
- Citric acid monohydrate: : 20.0
- Stannous chloride dihydrate: : 0.7
- Tetraethylenepentamine: : 30.0

Citric acid monohydrate was dissolved in water, and stannous chloride dihydrate, sodium sulfite and tetraethylenepentamine were then added to the resultant solution in this order in the above-described compounding ratio and dissolved therein to form a liquid agent.

### Formulation (14)

- Sodium molybdate dihydrate: : 0.7
- Citric acid monohydrate: : 20.0
- Stannous chloride dihydrate: : 0.7
- Triethylenetetramine: : 30.0
- Polysodium acrylate: :2.0

(molecular weight = about 8000)

Citric acid monohydrate was dissolved in water, and stannous chloride dihydrate, sodium molybdate dihydrate, triethylenetetramine and polysodium acrylate were then added to the resultant solution in this order in the above-described compounding ratio and dissolved therein to form a liquid agent.

### Formulation (15)

- Sodium molybdate dihydrate: : 0.7
- Citric acid monohydrate: : 20.0
- Stannous chloride dihydrate: : 0.7
- Triethylenetetramine: : 30.0
- Acrylic acid-methacylic acid: : 2.0

copolymer (molecular weight = about 8000, reaction molar ratio = 1 : 1)

Citric acid monohydrate was dissolved in water, and stannous chloride dihydrate, sodium molybdate dihydrate, triethylenetetramine and acrylic acid/methacrylic acid copolymer were then added to the resultant solution in this order in the above-described compounding ratio and dissolved therein to form a liquid agent.

### Formulation (16)

- Sodium molybdate dihydrate: : 0.7
- Citric acid monohydrate: : 20.0
- Stannous chloride dihydrate: : 0.7
- Triethylenetetramine: : 30.0
- Phosphinic acid*¹: : 2.0

*1 Phosphinic acid had the following structure:

Citric acid monohydrate was dissolved in water, and stannous chloride dihydrate, sodium molybdate dihydrate, triethylenetetramine and phosphinic acid were then added to the resultant solution in this order in the above-described compounding ratio and dissolved therein to form a liquid agent.

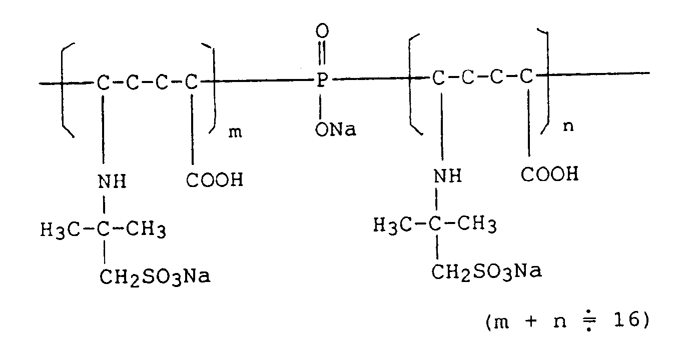

### (1) Comparative Formulation Examples (17) to (19)

### Formulation (17)

- Sodium gluconate: : 20
- Sodium hydroxide: : 1
- Stannous chloride dihydrate: : 1
- Sodium molybdate dihydrate: : 1
- Polysodium acrylate: : 2

Sodium gluconate was dissolved in water, and sodium hydroxide, stannous chloride dihydrate, sodium molybdate dihydrate and polysodium acrylate (molecular weight, about 8000) were then added to the resultant solution in this order in the above-described compounding ratio to form a liquid agent.

### Formulation (18)

- Sodium gluconate: : 20
- Sodium hydroxide: : 1
- Stannous chloride dihydrate: : 1
- Sodium molybdate dihydrate: : 1
- Morpholine: : 10
- Polysodium acrylate: : 2

(molecular weight, about 8000)

Sodium gluconate was dissolved in water, and sodium hydroxide, stannous chloride dihydrate, sodium molybdate dihydrate, morpholine and polysodium acrylate (molecular weight, about 8000) were then added to the resultant solution in this order in the above-described compounding ratio to form a liquid agent.

### Formulation (19)

- Potassium pyrophosphate: : 12
- Sodium hydroxide: : 5
- Hydrazine hydrate (content, 80%): : 50
- Polysodium acrylate: :5

(molecular weight, about 8000)

Potassium pyrrolinate was dissolved in water, and sodium hydroxide, hydrazine hydrate (content, 80%) and polysodium acrylate (molecular weight, about 8000) were then added to the resultant solution in this order in the above-described compounding ratio to form a liquid agent.

### Test Example (Test example for confirming the effect of preventing corrosion on heat-transfer iron surface and preventing adhesion of scales thereto during a leak of hardness)

A test was carried out by using the test apparatus shown in Fig. 3. In the drawing, reference numeral 1 denotes a hard water softener; reference numerals 2, 8, heat exchangers; reference numeral 3, a downcomer; reference numeral 4, the can bottom; reference numeral 5, a heat transfer test tube; reference numeral 6, an evaporation tube; reference numeral 7, a vapor reservoir; and reference numeral 9, a water feed tank.

The test water was supplied to the water supply tank 9, and a predetermined amount of agent was then added to the water. The water was supplied to the test boiler body by a pump. In the boiler body, the test water was heated to vapor by the heat transfer test tubes (heating portion) shown in Fig. 3 and discharged to the outside of the boiler system so that the boiler water was concentrated.

### (Formation of test water)

240 l of tap water of Osaka-City was added to 560 l of water obtained by removing hardness ingredients contained in the tap water of Osaka-City by the softener shown in Fig. 3 to form test water. The results of analyses of water quality are shown in Table 5.

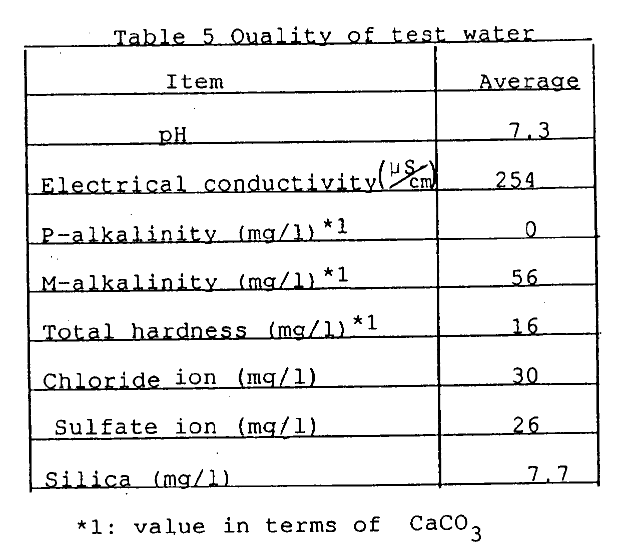

### (Test Condition)

Test time: 7 hours/day (including temperature rise for 1 hour and temperature falling for 1 hour) x 20 days = 140 hours
Time at a predetermined test pressure of 10 Kg/cm²: 5 hours x 20 = 100 hours
Test pressure: 10 Kg/cm²
Material of test tube: STPG38
Heat-transfer load (evaporation rate of heat transfer surface):
Heat transfer tube No. 1: about 170 Kg/m²·h high load
Heat transfer tube No. 2: about 80 Kg/m²·h low load
Heat transfer tube No. 3: about 170 Kg/m²·h high load
(The evaporation rate of the heat transfer surface of general boilers is 60 to 100 Kg/m²·h, and the evaporation rate of some boilers exceeds 100 Kg/m²·h in recent years.)
Area of heat transfer tube: 0.026 m² (Heat transfer tube Nos. 1 and 3)
Amount of holding water : 101
Evaporation: about 7 Kg/h
Blow rate: about 5% (intermittently)
Test water quality: softened water of Osaka-City 70% + original tap water of Osaka-City 30%
Hardness ingredient: about 16 mg/l as total hardness
(The value during a hardness leak is generally 2 to 4 mg CaCO₃/l.)

### Confirmation of test result

After the test had been completed, the high-load heat transfer test tube was discharged, and the deposit (mg) of scales, the number (number/dm²) of pitting and the presence of the film were examined. The test results obtained are summarized in Table 6.
Note) Test Nos. 1 to 19 show the results of the tests which used the formulations (1) to (19), respectively.
Formulations (1) to (16) and (19) were added so that the concentration in the boiler water was 1000 mg/l, and Formulations (17) and (18) were added so that the concentration was 2000 mg/l.

All the adding amounts shown in the table are respectively shown by the concentrations in the boiler water.
*1) The scale adhesion index was calculated from the calculation equation below using the average weight of calcium adhering to the high-load heat transfer tube Nos. 1 and 3. 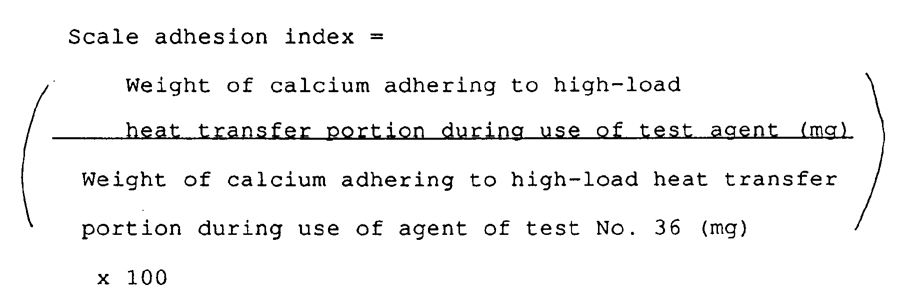
   The agent of Test No. 36 is a typical agent of the invention disclosed in Japanese Patent Publication No. 62-27157 of the applicant (describe above as prior art in "Description of the Related Art") and it has the best effect as prior art. This agent was used as a control for the purpose of further clarifying the effect of the present invention. The deposit of hardness ingredients was measured by washing each of the heat transfer portions (test tubes) with a 30% nitric acid solution and then subjecting the washing to atomic absorption spectrophotometory.
*2) The criteria used for integrated evaluation were the following:
   5 ... The number of pitting is zero (number/dm²), an anticorrosive film is present, and the scale adhesion index is 20 or less. It is generally decided that an agent is very good.
   4 ... The number of pitting is zero (number/dm²), an anticorrosive film is present, and the scale adhesion index is 21 to 35. It is generally decided that an agent is usable.
   3 ... The number of pitting is zero (number/dm²), an anticorrosive film is present, and the scale adhesion index is 36 to 50. It is generally decided that an agent is usable.
   2 ... The number of pitting is 1 to 10 (number/dm²), an anticorrosive film is absent, and the scale adhesion index is 51 or more. It is generally decided that an agent is unusable.
   1 ... The number of pitting is 1 to 10 (number/dm²), an anticorrosive film is absent, and the scale adhesion index is 101 or more. Alternatively, the number of pitting is 11 or more (number/dm²), an anticorrosive film is absent, and the scale adhesion index is 51 or more. It is generally decided that an agent is unusable.

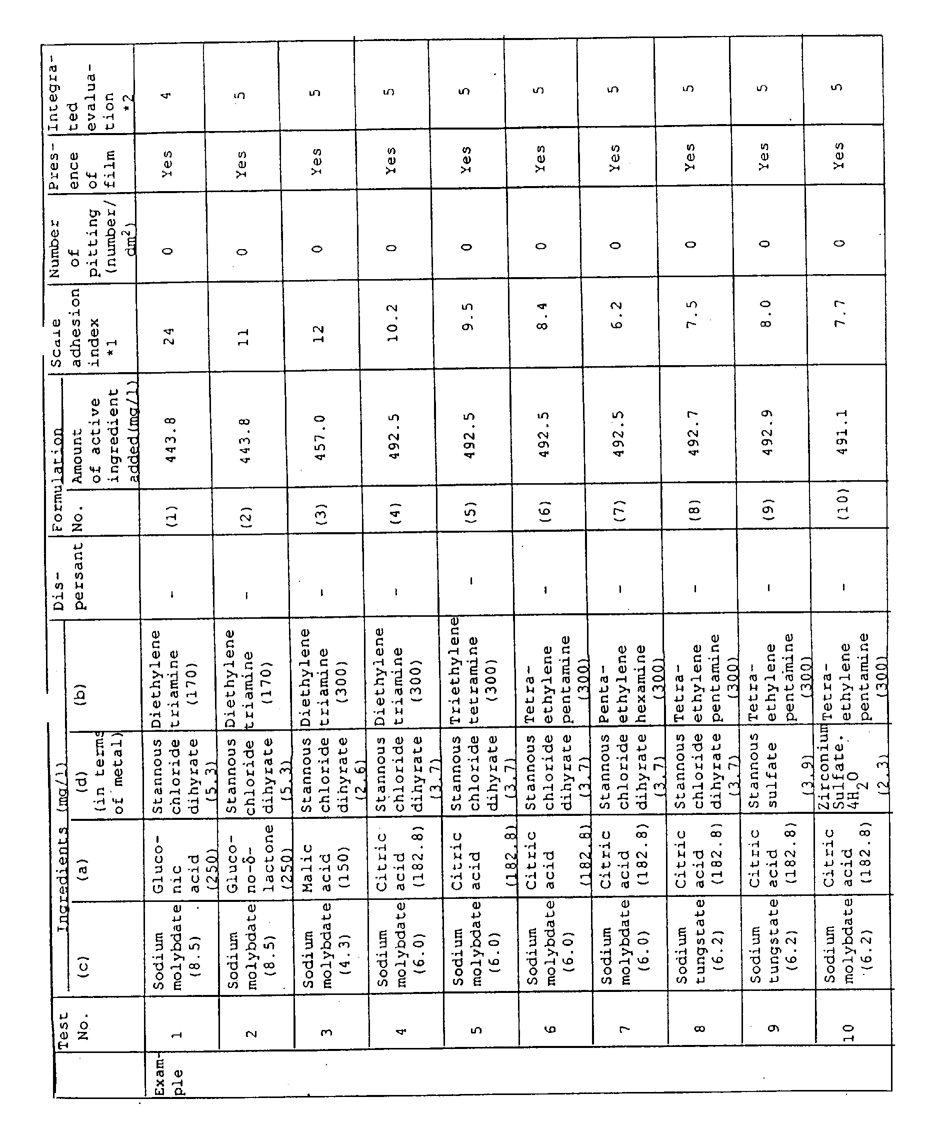

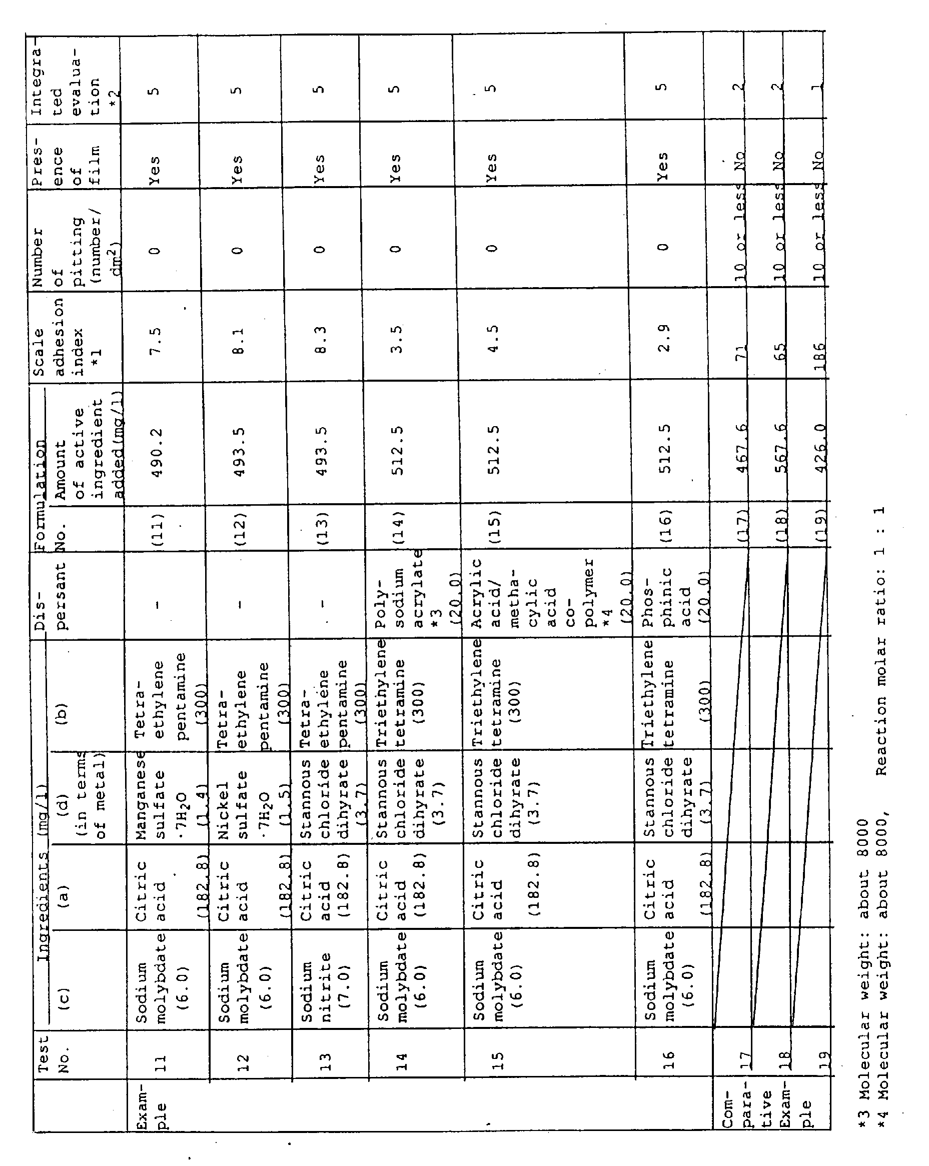

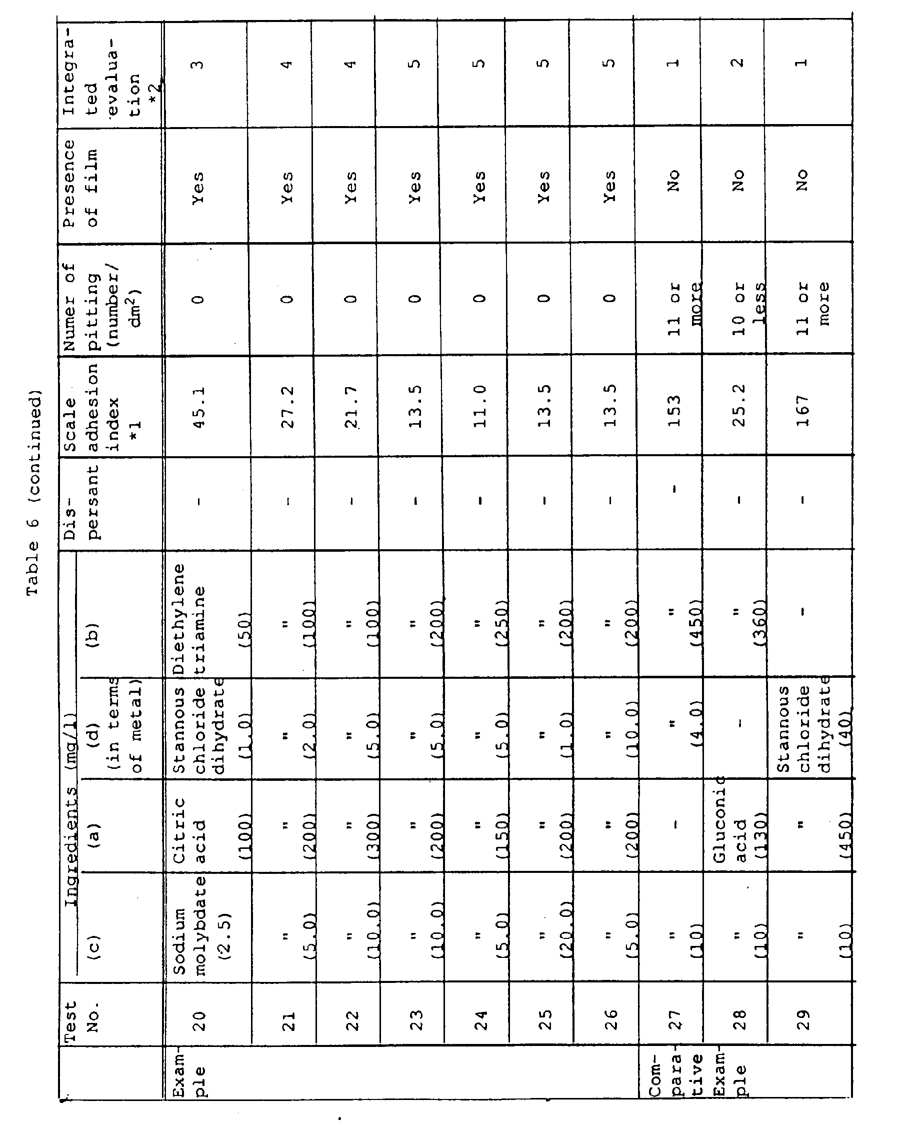

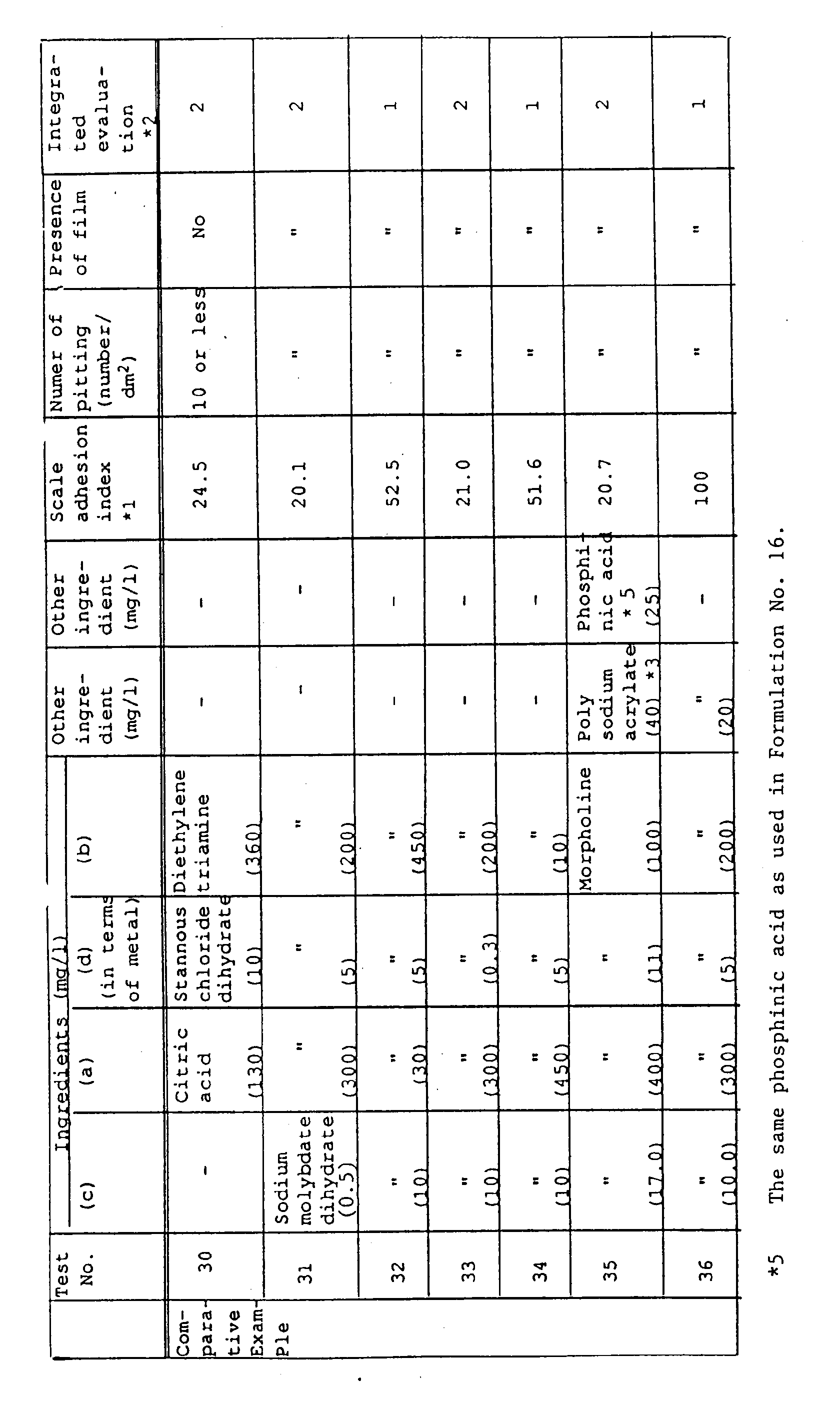

### [Consideration]

When the film formed in an example (Test No. 6) of the present invention was subjected to X-ray diffraction analysis, the same X-ray diffraction pattern as that shown in Fig. 1 was obtained. Triiron tetroxide was recognized by searching for the pattern in the ASTM cards, and other iron oxides were not detected. This reveals that the component of the film is triion tetroxide.

When a surface and a section of the film were observed under an electron microscope, it was recognized that the film has an extremely dense form having no defective portion and a uniform thickness.

When a section of the film was measured by an X-ray microanalyzer, it was recognized that triion tetroxide reaches the surface layer of the base material in the same way as shown in Fig. 2.

Further, when the specimen on which the film was formed was examined with respect to IR absorption by reflection IR, the presence of an organic substance was not detected, and it was recognized that the film contains neither polyalkylene polyamine nor aliphatic hydroxycarboxylic acid.

As described above, the present invention is capable of preventing corrosion of a ferrous metal in the water system of pure water or soft water boilers, particularly pitting corrosion, or significantly suppressing such corrosion, without effecting deoxidation treatment. Even when impurity ingredients or hardness ingredients are mixed (leak) in the boiler water, the invention can exhibit the effect.

The present invention is therefore very useful for controlling the operation of pure water boilers or soft water boilers.

## Claims

1. A water treatment method for pure water boilers comprising adding to the water system of a pure water boiler 0.2 to 50 epm of each of a compound which can release aliphatic hydroxycarboxylic acid ions in water and a polyamine represented by the following formula (I):
H₂N(CH₂CH₂NH)ₙH (I)
(wherein n denotes an integer of 2 to 5) or an acid addition salt thereof so as to prevent corrosion of the ferrous metal in said water system of said pure water boiler, whereby preferably the ratio by epm of the ingredient (b) to the ingredient (a) is not less than 1, and whereby preferably a preparation containing the two ingredients is first prepared and then added.

2. A water treatment method for soft water boilers comprising adding to the water system of a soft water boiler the following compounds:
(a) 50 to 5000 mg/l of a compound which can release aliphatic hydroxycarboxylic acid ions in water;
(b) 20 to 5000 mg/l of a polyamine represented by the following formula (I):
H₂N(CH₂CH₂NH)ₙH (I)
(wherein n denotes an integer of 2 to 5) or an acid addition salt thereof;
(c) 1 to 100 mg/l of at least one compound selected from the group consisting of molybdic acid, tungstic acid, nitrous acid and alkali salts thereof, and
(d) a heavy metal compound which can release zirconium, tin, manganese or nickel ions in water, in an amount of 0.5 to 100 mg/l in terms of metal ion;
so as to prevent corrosion of the ferrous metal in said water system of said soft water boiler, whereby preferably the ingredients (a) to (d) are added to the soft boiler water in such a manner that the ingredient (c) is preferably 2.5 to 100 mg/l, the ingredient (a) is preferably 100 to 5000 mg/l, the ingredient (d) is preferably 1 to 100 mg/l and the ingredient (b) is preferably 50 to 5000 mg/l, and whereby preferably an agent containing the four ingredients is first prepared and then added.

3. A water treatment method for soft water boilers according to Claim 12, whereby the total amount of the ingredients (a) to (d) is 100 parts by weight, the ingredient (c) is within the range of 0.01 to 58.7 parts by weight, the ingredient (a) is within the range of 0.95 to 99.6 parts by weight, the ingredient (d) is within the range of 0.005 to 58.5 parts by weight (in terms of metal ion), and the ingredient (b) is within the range of 0.38 to 99.0 parts by weight and whereby the total concentration of the ingredients (a) to (d) in the solution agent is preferably 10 to 70% by weight and whereby the molar ratio between the ingredients (a) and (b) is within the range of 6 : 1 to 1 :10.

## Patentansprüche

1. Verfahren zur Wasserbehandlung für Reinwasserboiler, welches die Zugabe von 0,2 - 50 epm von je einer Verbindung, die aliphatische Hydroxycarbonsäureionen in Wasser frei-setzen kann und eines Polyamins der nachfolgenden Formel (I):
H₂N(CH₂CH₂NH)ₙH (I)
(worin n ein Ganzzahliges von 2 bis 5 bedeutet) oder ein Säureadditionsalz hiervon zum Wassersystem eines Reinwasserboilers umfaßt, um die Korrosion von Eisenmetall im Wassersystem des Reinwasserboilers zu verhindern, wobei das Verhältnis des Bestandteils (b) zum Bestandteil (a), angegeben in epm, bevorzugt nicht weniger als 1 beträgt, und wobei bevorzugt zunächst eine Zubereitung, die die zwei Bestandteile enthält, hergestellt und anschließend zugegeben wird.

2. Verfahren zur Wasserbehandlung für Weichwasserboiler, welches die Zugabe der nachfolgenden Verbindungen zum Wassersystem eines Weichwasserboilers umfaßt:
(a) 50 - 5000 mg/l einer Verbindung, die aliphatische Hydroxycarbonsäureionen in Wasser freisetzen kann;
(b) 20 - 5000 mg/l eines Polyamins der nachfolgenden Formel (I)
H₂N(CH₂CH₂NH)ₙH (I)
(worin n ein Ganzzahliges von 2 - 5 bedeutet), oder ein Säureadditionssalz hiervon;
(c) 1 - 100 mg/l wenigstens einer Verbindung, ausgewählt aus der Gruppe, bestehend aus Molybdänsäure, Wolframsäure, salpetrige Säure und ihrer Alkalisalze und
(d) einer Schwermetallverbindung, die Zirkonium-, Zinn-, Mangan- oder Nickelionen in Wasser in einer Menge von 0,5 - 100 mg/l, ausgedrückt als Metallion, freisetzen kann,
um die Korrosion von Eisenmetall im Wassersystem des Weichwasserboilers zu verhindern, worin die Bestandteile (a) - (d) bevorzugt in einer Weise zum Weichwasserboilerwasser zugegeben werden, daß der Bestandteil (c) bevorzugt 2,5 - 100 mg/l, der Bestandteil (a) bevorzugt 100 - 5000 mg/l, der Bestandteil (d) bevorzugt 1 - 100 mg/l und der Bestandteil (b) bevorzugt 50 - 5000 mg/l beträgt, und worin bevorzugt ein die vier Bestandteile enthaltendes Mittel zunächst hergestellt und anschließend zugegeben wird.

3. Verfahren zur Wasserbehandlung für Weichwasserboiler nach Anspruch 2, worin die Gesamtmenge der Bestandteile (a) bis (d) 100 Gewichtsteile beträgt, der Bestandteil (c) innerhalb des Bereichs von 0,01 bis 58,7 Gewichtsteilen, der Bestandteil (a) innerhalb des Bereichs von 0,95 bis 99,6 Gewichtsteilen, der Bestandteil (d) innerhalb des Bereichs von 0,005 bis 58,5 Gewichtsteilen (angegeben als Metallion), und der Bestandteil (b) innerhalb des Bereichs von 0,38 bis 99,0 Gewichtsteilen liegt, und worin die Gesamtkonzentration der Bestandteile (a) - (d) im Lösungsmittel bevorzugt 10 - 70 Gewichtsprozent beträgt und worin das Molverhältnis zwischen den Bestandteilen (a) und (b) innerhalb des Bereichs von 6:1 bis 1:10 liegt.

## Revendications

1. Procédé pour traiter l'eau pour des chaudières à eau pure, comprenant l'addition au système d'eau d'une chaudière à eau pure, de 0,2 à 50 epm (milligramme équivalent par litre) respectivement (a) d'un composé qui peut libérer des ions d'acide hydroxycarboxylique aliphatique dans l'eau, et (b) d'une polyamine représentée par la formule suivante (I):
H₂N (CH₂CH₂NH)ₙ H (I)
(dans laquelle n est un entier de 2 à 5) ou d'un sel d'addition d'acide de celle-ci, pour empêcher la corrosion du métal ferreux dans ce système d'eau de cette chaudière à eau pure, de telle sorte que de préférence, le rapport en epm du composant (b) au composant (a) ne soit pas inférieur à 1, et que les deux composants soient de préférence d'abord préparés et ensuite ajoutés.

2. Procédé pour traiter l'eau pour des chaudières à eau douce, comprenant l'addition au système d'eau d'une chaudière à eau douce des composants suivants :
(a) 50 à 5000 mg/l d'un composé qui peut libérer des ions d'acide hydroxycarboxylique aliphatique dans l'eau;
(b) 20 à 5000 mg/l d'une polyamine représentée par la formule suivante (I) :
H₂N (CH₂CH₂NH)ₙH (I)
(dans laquelle n est un entier de 2 à 5) ou d'un sel d'addition d'acide de celle-ci;
(c) 1 à 100 mg/l d'au moins un composé choisi dans le groupe consistant en acide molybdique, acide tungstique, acide nitreux et leurs sels de métaux alcalins, et
(d) un composé de métal lourd qui peut libérer des ions zirconium, étain, manganèse ou nickel dans l'eau, en une quantité de 0,5 à 100 mg/l en termes d'ion métallique;
pour empêcher la corrosion du métal ferreux dans ce système d'eau de cette chaudière à eau douce, de telle sorte que de préférence, les composants (a) à (d) sont ajoutés à l'eau de la chaudière à eau douce en des quantités telles que le composant (c) représente de préférence 2,5 à 100 mg/l, le composant (a) de préférence 100 à 5000 mg/l, le composant (d) de préférence 1 à 100 mg/ml et le composant (b) de préférence 50 à 5000 mg/l, et qu'un agent contenant les quatre composants est de préférence d'abord préparé et ensuite ajouté.

3. Procédé pour traiter l'eau pour des chaudières à eau douce suivant la revendication 2, dans lequel la quantité totale des composants (a) à (d) est de 100 parties en poids, le composant (c) est compris dans la gamme de 0,01 à 58,7 parties en poids, le composant (a) est compris dans la gamme de 0,95 à 99,6 parties en poids, le composant (d) est compris dans la gamme de 0,005 à 58,5 parties en poids (en terme d'ion métallique), et le composant (b) est compris dans la gamme de 0,38 à 99,0 parties en poids, et la concentration totale des composants (a) à (d) dans l'agent en solution est de préférence de 10 à 70% en poids et le rapport molaire entre les composants (a) et (b) est compris dans la gamme de 6:1 à 1:10.
